# EUROPEAN PATENT SPECIFICATION

(11) **EP 1 893 451 B1**
(45) Date of publication and mention of the grant of the patent: **26.11.2008**
(21) Application number: 06762072.4
(22) Date of filing: 19.06.2006
(51) Int. Cl.: B60R 21/01

(54) **DRIVER POSITION SENSOR FOR BACKREST OF THE SEAT OF A MOTOR VEHICLE**
FAHRERPOSITIONSSENSOR FÜR RÜCKENLEHNE DES SITZES EINES KRAFTFAHRZEUGS
CAPTEUR DE POSITION DE CONDUCTEUR POUR UN DOSSIER DU SIEGE D UN VEHICULE A MOTEUR

(30) Priority: 22.06.2005 IT TO20050084 U
(43) Date of publication of application: 05.03.2008
(73) Proprietor: Farelli, Bruno, I-10090 Rosta TO (IT); Farelli, Cesare, 10040 Cumiana, Turin (IT)
(72) Inventor: Farelli, Bruno, I-10090 Rosta TO (IT); Farelli, Cesare, 10040 Cumiana, Turin (IT)
(74) Representative: Lotti, Giorgio
(86) International application number: PCT/EP2006/005836
(87) International publication number: WO 2006/136347

(56) References cited:
- DE-A1- 10 231 016
- US-A- 5 439 249

## Description

The present invention relates to a sensor for verifying the correct position of the driver or passenger in the seat of a motor vehicle. Said sensor is not permanently fixed to the seat but can be transferred from one vehicle to another with extreme ease.

A sensor according to the preamble of claim 1 is generally known from DE 102 31 016 A1. Frequently, the position assumed by drivers and passengers in the seats of motor vehicles is not correct from the standpoint of the integrity of the vertebral column. In fact, the position of the backrest should be kept as vertical as possible and the back of the driver and/or passenger should adhere to the backrest as snugly as possible since the shape of the backrest is designed so as to present the best possible resting surface. This condition, however, is very rarely satisfied, with the consequences that can be readily imagined. On the other hand, even though the backrest of the seat of a motor vehicle is shaped in an ergonomic way, automobile manufacturers fail to provide the seat with sensors that are able to indicate to the driver or passenger that his or her position is not correct.

The purpose of the present invention is to make up for said deficiency and to help the driver or passenger to maintain the correct position on the seat.

The above purpose is achieved by the present invention, the subject of which is a sensor for the seat of a motor vehicle that has the characteristics specified in Claim 1.

Further characteristics and advantages will emerge clearly from the ensuing description with reference to the attached plate of drawings, which are provided purely by way of non-limiting example and in which:

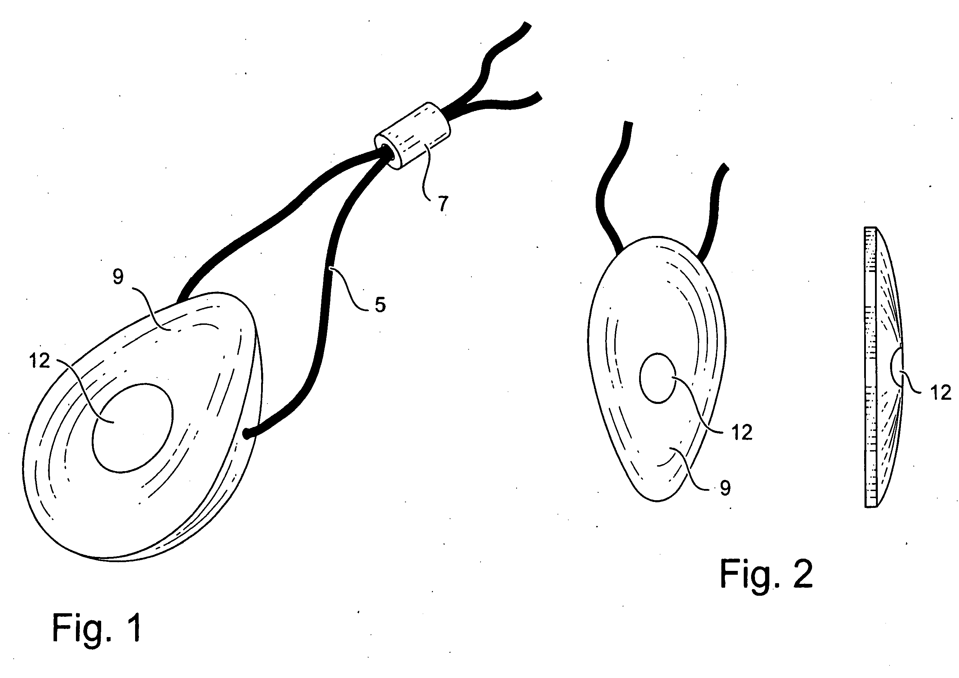

- Figure 1 is a perspective view of the sensor according to the invention, which includes a positioning cord;
- Figure 2 shows two views (front and side) of a sensor according to the invention having a different shape from that of Figure 1;

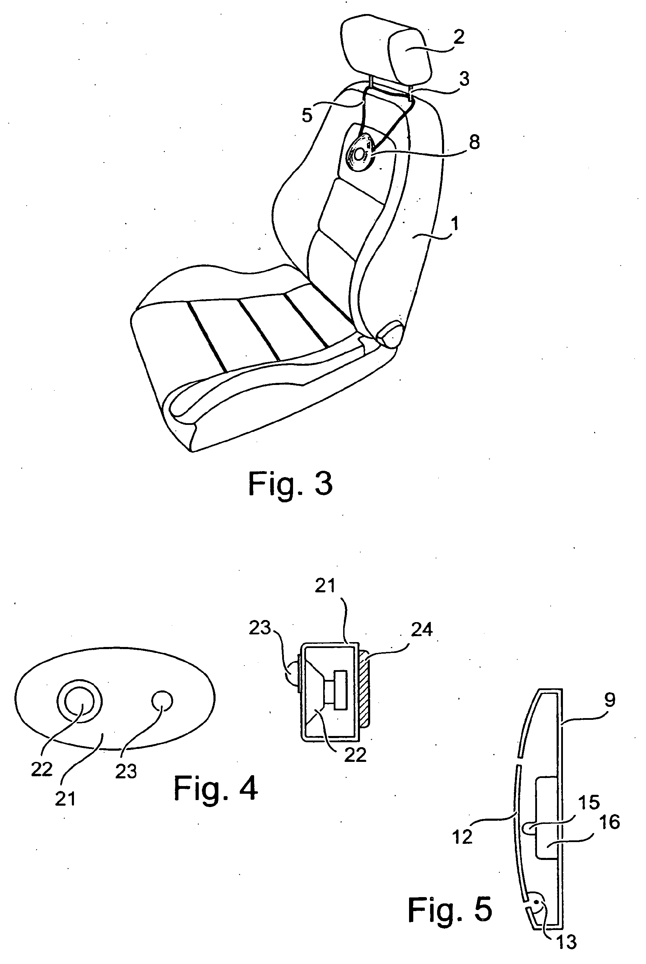

- Figure 3 is a view of the sensor according to the invention positioned on the seat of a motor vehicle;
- Figure 4 shows two views (a front view and a lateral cross-sectional view) of an acoustic and visual alarm connected via radio to the sensor according to the invention.
- Figure 5 is a lateral cross-sectional view of an embodiment of the sensor according to the invention;
- Figure 6 is a front view, in partial transparency, of a particular embodiment of the sensor according to the invention; and
- Figures 7 to 11 are front views of different embodiments of the invention.

With reference to the figures, the number 1 designates the backrest of the seat of a motor vehicle, provided with a headrest 2 supported by bars 3 inserted in the backrest 1. A loop of cord 5 provided with a tube 7 for adjustment of the amplitude of the loop is fitted around the supporting bars.

Fitted on the loop of cord 5 is the sensor 8 according to the invention, which is constituted by a casing or shell 9 of contained thickness, preferably made of plastic material, having a substantially circular profile in its the basic version.

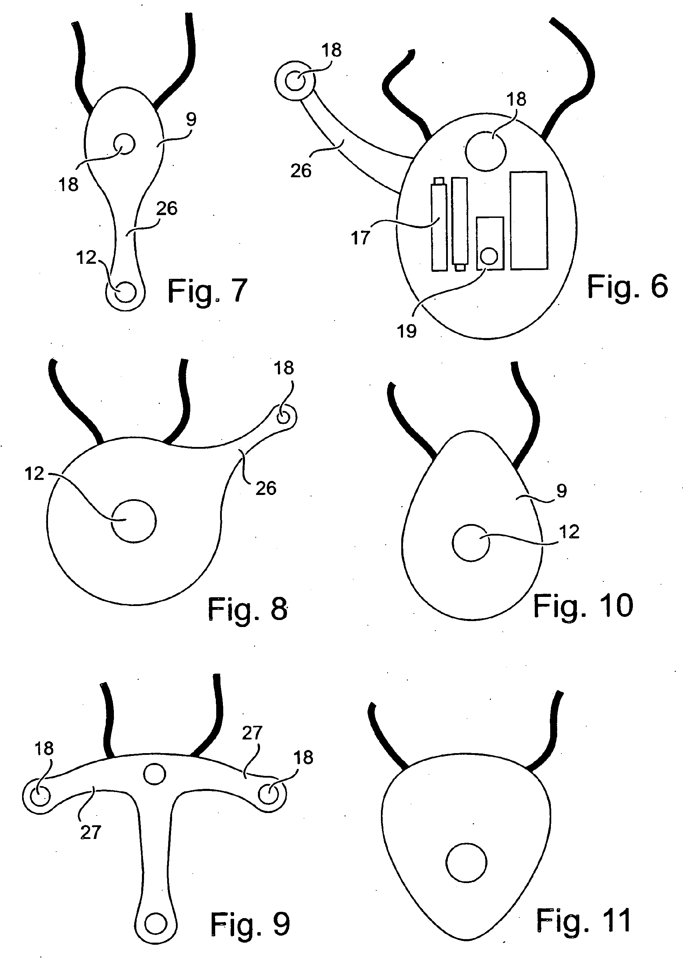

Illustrated in Figures 7 to 11 are other geometrical shapes that the shell may assume, without this implying any departure from the sphere of protection of the present invention.

A more detailed description of some of these shapes will be furnished in the course of the ensuing description. The shell 9 is provided with a part of front wall 12 that is compressible in so far as it is, for example, connected by a hinge made of plastic film 13 to the remaining part of the shell. The film-type hinge represents one possible solution designed to enable displacement of the part 12 of wall. Other equivalent known solutions, such as for example a part of bellows-like wall, may conveniently be adopted by the manufacturer.

In its movement, the part of wall 12 is designed to press the push-button 15 of a microswitch 16, set within the shell 9 and supplied by batteries 17. The push-button 15 may also emerge from the surface of the shell 9 and replace the compressible part of wall 12 altogether.

The microswitch is designed to activate an audible alarm 18 in the case where the pressure thereon ceases, of course after the sensor has been activated via an on-off switch (not illustrated). The pressure microswitch may, according to the model of sensor, be replaced by a proximity sensor (19) or else by a presence detector (not illustrated), appropriately calibrated for detecting the presence of the occupant of the seat at an adequate distance, for example between 0 mm and 10 mm.

As in the case of the microswitch, the absence of the occupant will trigger sending of a signal to the audible alarm 18 and/or to a receiver 21, provided both with an acoustic signal 22 and with a luminous signal 23 set in front of the occupant of the seat and held in position by known means, for example bi-adhesive tape 24.

As mentioned previously, in some embodiments the acoustic alarm provided on the sensor 8 is supported by an arm 26 (Figures 6-8) or by a number of arms 27 (Figure 9).

The sensor 8 according to the invention has the essential task of sending a signal when the occupant of the seat bends his or her back forwards so as to prevent the occupant from assuming wrong positions. Furthermore, the sensor 8 can also represent a valid anti-drowse device. Use of the sensor is very convenient in so far as it hangs with the cord 5 from the headrest 2 in a position that approximately corresponds to the base of the neck of the occupant. The position may moreover be adjusted by sliding the tube 7 along the cord 5.

## Claims

1. A sensor (8) for the backrest of the seat of a motor vehicle, designed to control the position of the back of the occupant, **characterized in that** it is made up of a shell (9) of contained thickness, preferably made of plastic material, connectable via wire means (5) to the supporting bars (3) of the headrest (2), and provided at the front with a part (12, 15) associated to means (16, 19) for activation of an alarm device (18, 21).

2. The sensor according to Claim 1, **characterized in that** the activation means are constituted by a pressure microswitch of the normally open type (16).

3. The sensor according to Claim 1, **characterized in that** the activation means are constituted by a proximity sensor (19).

4. The sensor according to Claim 1, **characterized in that** the activation means are constituted by a presence sensor.

5. The sensor according to Claim 1, **characterized in that** the alarm device is constituted by an acoustic alarm (18).

6. The sensor according to Claim 1, **characterized in that** the alarm device (21) is of the visual/acoustic type and is constituted by a warning light (23) and by an audible alarm (22).

7. The sensor according to Claim 1, **characterized in that** the alarm device (21) is positioned in front of the occupant of the seat.

8. The sensor according to Claim 1, **characterized in that** the wire means (5) are adjustable in length.

## Patentansprüche

1. Sensor (8) für die Rückenlehne des Sitzes eines Kraftfahrzeuges, vorgesehen zur Steuerung der Position des Rückens eines Insassen,
**dadurch gekennzeichnet, dass** dieser durch ein Gehäuse (9) von geschlossener Dicke gebildet ist, vorzugsweise hergestellt aus Kunststoffmaterial, und befestigbar über Seilmittel (5) an Stützstäben (3) einer Kopfstütze (2), und an der Vorderseite mit Teilen (12, 15) ausgestattet ist, die mit Mitteln (16, 19) zur Aktivierung einer Alarmeinheit (18, 21) zusammenwirken.

2. Sensor gemäß Anspruch 1,
**dadurch gekennzeichnet, dass** die Aktivierungsmittel aus einem Mikrodruckschalter mit Normal-Offen-Funktion (16) bestehen.

3. Sensor gemäß Anspruch 1,
**dadurch gekennzeichnet, dass** die Aktivierungsmittel aus einem Annäherungssensor (19) bestehen.

4. Sensor gemäß Anspruch 1,
**dadurch gekennzeichnet, dass** die Aktivierungsmittel aus einem Drucksensor bestehen.

5. Sensor gemäß Anspruch 1,
**dadurch gekennzeichnet, dass** die Alarmeinheit durch einen Akustikalarm (18) gebildet ist.

6. Sensor nach Anspruch 1,
**dadurch gekennzeichnet, dass** die Alarmeinheit (21) eine optisch-akustische Funktion ausführend durch eine Warnleuchte (23) und durch einen akustischen Alarm (22) gebildet ist.

7. Sensor nach Anspruch 1,
**dadurch gekennzeichnet, dass** die Alarmeinheit (21) auf der Vorderseite des Sitzes des Insassen angeordnet ist.

8. Sensor nach Anspruch 1,
**dadurch gekennzeichnet, dass** die Seilmittel (5) in der Länge einstellbar ausgebildet sind.

## Revendications

1. Capteur (8) pour le dossier du siège d'un véhicule automobile, conçu pour contrôler la position du dos de l'occupant, **caractérisé en ce qu'**il est constitué d'une coquille (9) d'épaisseur donnée, de préférence constituée de matière plastique, pouvant être connectée, par l'intermédiaire de moyens formés de câbles électriques (5), aux barres de support (3) de l'appuie-tête (2), et munie sur l'avant d'une partie (12, 15) associée à des moyens (16, 19) d'activation d'un dispositif d'alarme (18, 21).

2. Capteur selon la revendication 1, **caractérisé en ce que** les moyens d'activation sont constitués par un micro-commutateur à pression, du type normalement ouvert (16).

3. Capteur selon la revendication 1, **caractérisé en ce que** les moyens d'activation sont constitués par un détecteur de proximité (19).

4. Capteur selon la revendication 1, **caractérisé en ce que** les moyens d'activation sont constitués par un détecteur de présence.

5. Capteur selon la revendication 1, **caractérisé en ce que** le dispositif d'alarme est constitué d'une alarme acoustique (18).

6. Capteur selon la revendication 1, **caractérisé en ce que** le dispositif d'alarme (21) est du type visuel/acoustique, et est constitué d'un témoin lumineux (23) et d'une alarme sonore (22).

7. Capteur selon la revendication 1, **caractérisé en ce que** le dispositif d'alarme (21) est placé devant l'occupant du siège.

8. Capteur selon la revendication 1, **caractérisé en ce que** les moyens formés de câbles électriques (5) sont réglables en longueur.
